# EUROPÄISCHE PATENTSCHRIFT

(11) **EP 0 547 049 B1**
(45) Veröffentlichungstag und Bekanntmachung des Hinweises auf die Patenterteilung: **10.11.1993**
(21) Anmeldenummer: 90912663.3
(22) Anmeldetag: 02.08.1990
(51) Int. Cl.: B23B 31/02

(54) **VORRICHTUNG ZUR VERBINDUNG ZWEIER WERKZEUGTEILE**
DEVICE FOR CONNECTING TWO TOOL SECTIONS
DISPOSITIF DE LIAISON DE DEUX PARTIES D'OUTIL

(30) Priorität: 08.09.1989 DE 3929976
(43) Veröffentlichungstag der Anmeldung: 23.06.1993
(73) Patentinhaber: KOMET Präzisionswerkzeuge Robert Breuning GmbH, D-74354 Besigheim (DE)
(72) Erfinder: SCHEER, Gerhard, D-7120 LöCHGAU (DE); MÜNDLEIN, Werner, D-7121 Bietigheim-Bissingen (DE); STOLZ, GERHARD, D-7121 Ingersheim (DE)
(74) Vertreter: Wolf, Eckhard, Dr.-Ing.
(86) Internationale Anmeldenummer: EP9001270
(87) Internationale Veröffentlichungsnummer: WO9103347

(56) Entgegenhaltungen:
- EP-A- 0 145 985
- DE-A- 3 734 052
- DE-C- 3 632 045
- FR-A- 2 623 573

## Beschreibung

Die Erfindung betrifft eine Vorrichtung zur Verbindung zweier eine gemeinsame Achse, insbesondere Drehachse, aufweisender Werkzeugteile, mit einem am ersten Werkzeugteil axial überstehenden Paßzapfen, mit einer den Paßzapfen an dessen Wurzel umgebenden Ringfläche, mit einer am zweiten Werkzeugteil axial überstehenden, eine Paßbohrung zur Aufnahme des Paßzapfens und eine gegen die Ringfläche anpreßbare ringförmige Stirnfläche aufweisenden Anschlußhülse, mit einem in einer Querbohrung des Paßzapfens verschiebbar und gegebenenfalls um seine Achse drehbar angeordneten, an seinen Enden einen Innen- bzw. Außenkonus aufweisenden, ein- oder mehrteiligen Klemmbolzen, und mit zwei in einander diametral gegenüberliegenden Innengewinden der Anschlußhülse geführten, einen nach dem Hülseninneren weisenden, dem Innen- bzw. Außenkonus des Klemmbolzens entsprechenden Außen- bzw. Innenkonus aufweisenden, beim Spannvorgang keilartig mit dem Klemmbolzen verspannbaren Halteschrauben, wobei der Klemmbolzen und die Halteschrauben einen beim Spannvorgang den Einzug des Paßzapfens in die Paßbohrung und das gegenseitige Anpressen der Ringfläche und der Stirnfläche bewirkenden Achsversatz aufweisen.

Es ist eine Vorrichtung dieser Art bekannt (GB-A 2094191), bei der der Klemmbolzen als einstückiger Verbindungs- oder Pendelbolzen ausgebildet ist, dessen eines Ende als Innenkonus und dessen anderes Ende als Außenkonus ausgebildet werden kann. Der Spannvorgang wird bei dieser Vorrichtung durch Eindrehen der mit dem Außenkonus versehenen Halteschraube (Spannschraube) ausgelöst. Kommt es beim Eindrehen der Spannschraube zur Anlage, so treten die über die Schraube eingeleiteten Kräfte zunächst spannschraubenseitig am Pendelbolzen auf. Der Pendelbolzen wird dabei zuerst spannschraubenseitig gegen den dem Paßzapfenende zugewandten Querbohrungsgrund so angedrückt, daß der Paßzapfen in die Paßbohrung eingezogen wird. Unmittelbar danach geschieht dies auch beim Auflaufen des Pendelbolzen-Außenkonus auf den Innenkonus der gegenüberliegenden Halteschraube. Sobald eine gewisse Spannwirkung eingetreten ist, erfolgt eine vollständige Umsetzung der Radialkräfte in eine die Ringfläche des Paßzapfens und die Stirnfläche der Anschlußhülse gegeneinanderpressende Axialkomponente. Durch diese Art der Verspannung ergibt sich bevorzugt eine Aussteifung der Verbindungsvorrichtung in Richtung des Pendelbolzens. Durch die beim Bearbeitungsvorgang auftretenden Torsionskräfte kommt es zu einem Auflaufen der einander benachbarten Innen- und Außenkonusse, das vor allem dadurch ermöglicht wird, daß der Pendelbolzen eine kleine Drehung um seine Eigenachse ausführen kann. Dadurch erhöht sich die Verspannung zwischen Ring- und Stirnfläche und damit auch die Steifigkeit der Verbindung. Weiter bewirkt der Auflaufeffekt ein nichtharmonisches Schwingungsverhalten im Verbindungsbereich mit dem Ergebnis, daß die Eigenfrequenz des Systems in Abhängigkeit vom Torsionsmoment verschoben und eine etwa auftretende Torsionsschwingung deshalb gedämpft wird.

Weiter ist es bei einer Vorrichtung der eingangs angegebenen Art bekannt, den Klemmbolzen zweiteilig auszubilden und den Spannvorgang durch einen zwischen den beiden Klemmbolzenteilen angeordneten, über eine maschinenseitig angeordnete Einzugvorrichtung axial betätigbaren Ziehkeil auszulösen (Keilgetriebe). Auch dort kommt es beim Spannvorgang zu einer Verspannung der mit einem Außenkonus versehenen Klemmbolzen und der in einem Innengewinde der Anschlußhülse angeordneten, mit einem Innenkonus versehenen Halteschrauben. Die Aussteifung der Verbindungsvorrichtung erfolgt auch hier bevorzugt in Richtung der Klemmbolzen.

Der Erfindung liegt die Aufgabe zugrunde, die Verbindungsvorrichtung der eingangs angegebenen Art dahingehend zu verbessern, daß die Biegesteifigkeit quer zur Klemmbolzenachse erhöht und die Wechselgenauigkeit und das Dämpfungsverhalten verbessert wird.

Zur Lösung dieser Aufgabe werden die in den Ansprüchen 1 und 2 angegebenen Merkmalskombinationen vorgeschlagen. Weitere vorteilhafte Ausgestaltungen und Weiterbildungen der Erfindung ergeben sich aus den abhängigen Ansprüchen.

Die Erfindung geht von dem Gedanken aus, daß bei einer Vierpunktanlage zwischen Paßzapfen und Paßbohrung in zwei zueinander senkrechten Richtungen, eine unter Berücksichtigung der Verschiebbarkeit des Klemmbolzens exakt zentrische Ausrichtung und damit eine hohe Wechselgenauigkeit gewährleistet ist. Zusätzlich ergibt sich hierdurch eine Aussteifung der Verbindungsvorrichtung in zwei zueinander senkrechten Biegerichtungen.

Um dies zu erreichen, wird gemäß einer ersten Variante der Erfindung vorgeschlagen, daß die Wandstärke und das Material der Anschlußhülse, das Passungsspiel zwischen Paßzapfen und Paßbohrung und die über die Halteschrauben in das Hülsenmaterial einleitbare Spannkraft so aufeinander abgestimmt sind, daß die Anschlußhülse im Spannzustand in Achsrichtung des Klemmbolzens elastisch aufgeweitet und in Querrichtung hierzu unter elastischer Durchmesserverringerung in einander diametral gegenüberliegenden Bereichen mit der Innenfläche der Paßbohrung gegen die Oberfläche des Paßzapfens angepreßt ist. Bei geeigneter Wahl der Wandstärken und der Außen- und Innentoleranzen des Paßzapfens und der Paßbohrung erhält man somit eine Vierpunktanlage mit den oben beschriebenen Vorteilen einer erhöhten Biegesteifigkeit quer zur Klemmbolzenrichtung und einer verbesserten Selbstzentrierung und Wechselgenauigkeit. Durch diesen Effekt wird außerdem das Schwingungsverhalten des Verbindungssystems bei Biege- und Torsionsschwingungen verbessert.

Alternativ dazu wird gemäß einer zweiten Variante der Erfindung vorgeschlagen, daß die im Paßzapfen befindliche Querbohrung im Bereich ihres dem Zapfenende zugewandten Grundes eine sich über die Querbohrungslänge erstreckende, an ihren Längsrändern eine Anlage für den eingespannten Klemmbolzen bildende Vertiefung aufweist und daß der Paßzapfen mindestens einen sich über die Querbohrung offenen Einschnitt aufweist.

Mit dieser Maßnahme wird erreicht, daß der Paßzapfen beim Spannvorgang nicht an dem dem Zapfenende zugewandten Bohrungsgrund, sondern an zwei gegenüber diesem seitlich versetzten Anlagelinien der Querbohrung anliegt. Auf diese Weise wird beim Spannvorgang über den Klemmbolzen neben der in Achsrichtung des Paßzapfens wirkenden Kraftkomponente eine radiale Kraftkomponente auf den Paßzapfen ausgeübt, die diesen im µ-Bereich radial elastisch ausbaucht. Diese Ausbauchung überbrückt das Passungsspiel quer zur Klemmbolzenrichtung und führt damit ebenfalls zu einer selbstzentrierenden Vierpunktanlage mit den vorstehend aufgeführten Vorteilen. Hinzu kommt, daß hierdurch die elastische Verformung der Anschlußhülse zumindest zum Teil rückgängig oder entbehrlich gemacht wird.

Gemäß einer vorteilhaften Ausgestaltung der Erfindung wird die Vertiefung durch eine gegenüber der Querbohrung in Richtung Zapfenende exzentrische Bohrung mit gegenüber der Querbohrung kleinerem Durchmesser gebildet. Grundsätzlich ist es auch möglich, die Vertiefung durch eine zum Zapfenende gestreckte, ovale Verformung der Querbohrung zu bilden.

Als besonders vorteilhaft hat es sich erwiesen, wenn die Vertiefungsränder um die Querbohrungsachse einen Winkel von ± 40° bis ± 50° gegenüber dem endseitigen Bohrungsgrund einschließen.

Ein weiterer Vorteil dieser Maßnahme ist darin zu sehen, daß der Klemmbolzen eine zusätzliche Einspannung und Aussteifung innerhalb der Querbohrung erfährt, so daß eine verbesserte Drehmomentübertragung beim Bearbeitungsvorgang gewährleistet ist.

Der erfindungsgemäße Einschnitt kann im Bereich des dem freien Zapfenende und/oder der Zapfenwurzel zugewandten Grundes der Querbohrung angeordnet sein. Dieser Einschnitt führt beim Spannvorgang zu einer Aufspreizung der Querbohrung und damit zu einer (verstärkten) Ausbauchung des Paßzapfens und zur angestrebten selbstzentrierenden Vierpunktanlage. Die Einschnittiefe sollte dabei ein Mehrfaches der Wandstärke zwischen dem Einschnittgrund und dem Zapfenende betragen. Falls erforderlich, kann der Einschnitt auch als zum Zapfenende durchgehender Schlitz ausgebildet werden. Die Breite des Einschnittes sollte so klein wie möglich gewählt werden. Um Schmutzansammlungen im Einschnittbereich zu vermeiden, kann der Einschnitt mit einem elastomeren Material ausgefüllt werden.

Im folgenden wird die Erfindung anhand der in der Zeichnung in schematischer Weise dargestellten Ausführungsbeispiele näher erläutert. Es zeigen
- Fig. 1: einen Längsschnitt durch eine Verbindungsvorrichtung mit einstückigem Klemmbolzen im Spannzustand;
- Fig. 2: einen Querschnitt durch die Verbindungsvorrichtung nach Fig. 1;
- Fig. 3: einen Längsschnitt durch eine Verbindungsvorrichtung mit zweiteiligem Klemmbolzen im Spann-zustand;
- Fig. 4: eine Seitenansicht eines Werkzeugteils mit erfindungsgemäß modifizierter Querbohrung im Paßzapfen;
- Fig. 5: eine Seitenansicht entsprechend Fig. 4 für ein abgewandeltes Ausführungsbeispiel.

Die in der Zeichnung dargestellte Verbindungsvorrichtung dient sowohl zur lösbaren Kupplung von Werkzeugen an einer Maschinenspindel als auch zur Verbindung von Werkzeugteilen untereinander. Unter "Werkzeugteilen" sollen vorstehend und nachfolgend solche Bauteile verstanden werden, die entweder einen Paßzapfen oder eine Anschlußhülse mit Paßbohrung enthalten, also insbesondere Werkzeugköpfe, Werkzeugschäfte, Verlängerungs- und Reduzierungsteile, Verstellköpfe, Spindelvorsatzflansche und gegebenenfalls die Maschinenspindel selbst.

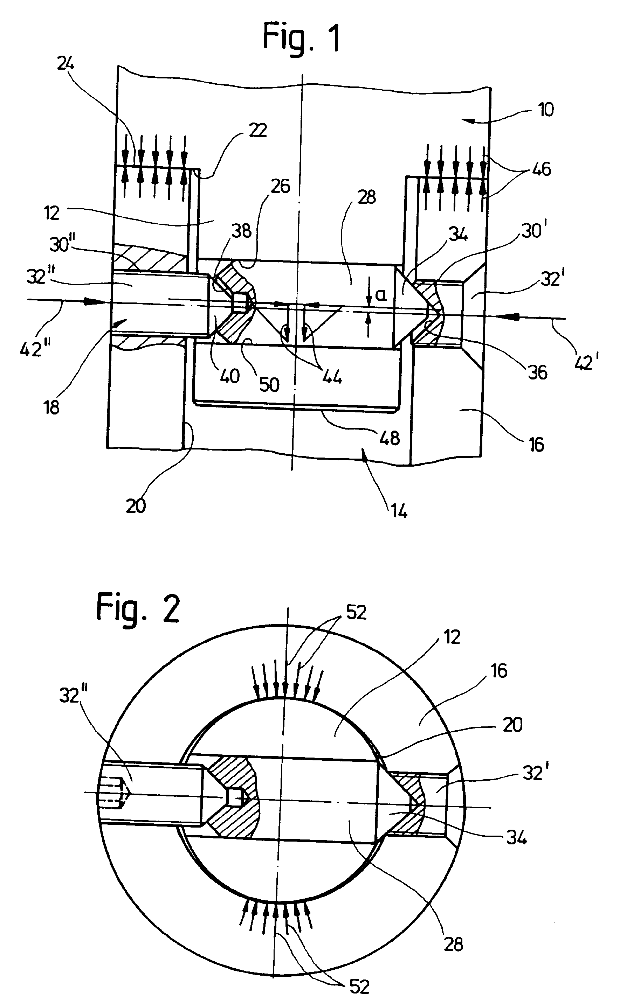

Die in den Fig. 1 und 2 gezeigte Verbindungsvorrichtung besteht im wesentlichen aus einem an einem ersten Werkzeugteil 10 axial überstehenden Paßzapfen 12, einer an einem zweiten Werkzeugteil 14 axial überstehenden Aufnahmehülse 16 und einem Spannmechanismus 18 zum Einziehen des Paßzapfens 12 in die Paßbohrung 20 der Aufnahmehülse 16 sowie zur Erzeugung einer Planflächenverspannung zwischen der den Paßzapfen umgebenden Ringfläche 22 des ersten Werkzeugteils 10 und der ringförmigen Stirnfläche 24 des zweiten Werkzeugteils 14. Der Spannmechanismus 18 enthält einen in einer Querbohrung 26 des Paßzapfens 12 verschiebbar angeordneten Klemmbolzen 28 sowie zwei in Innengewinden 30',30'' der Aufnahmehülse 16 geführte, einander diametral gegenüberliegende Halteschrauben 32' ,32''. Der Klemmbolzen 28 greift mit seinem Außenkonus 34 in einen Innenkonus 36 der benachbarten Halteschraube 32' ein und weist an seinem dem Außenkonus 34 gegenüberliegenden Ende einen Innenkonus 38 zur Aufnahme eines an der Halteschraube 32'' angeformten Außenkonus 40 auf.

Zur Herstellung der Verbindung zwischen den beiden Werkzeugteilen 10,14 wird zunächst der Paßzapfen 12 bei ausgedrehter Halteschraube 32'' lose in die Paßbohrung 20 der Aufnahmehülse 16 bis zum Anschlag der Planflächen 22,24 eingeführt. Beim anschließenden Eindrehen der Halteschraube 32'' in das Innengewinde 30'' kommt es zunächst zum Anschlag zwischen der Halteschraube 32'' und dem Klemmbolzen 28 im Bereich der einander zugewandten Konusflächen 38,40. Im weiteren Verlauf des Spannvorgangs wird der Klemmbolzen 28 mit seinem Außenkonus 34 bis zum Anschlag mit der Halteschraube 32' in den Innenkonus 36 eingeschoben. In diesem Zustand setzt der eigentliche Spannvorgang ein, bei welchem die durch die Halteschrauben 32'',32' eingeleiteten Spannkräfte 42'',42' über die konischen Anlageflächen aufgrund des Achsversatzes a in eine den Paßzapfen 12 in die Paßbohrung 20 einziehende Axialkraft 44 umgesetzt werden. Die Axialkraft 44 führt zu einer durch die Pfeile 46 angedeuteten Planflächenverspannung zwischen der Ringfläche 22 des ersten Werkzeugteils und der Stirnfläche 24 des zweiten Werkzeugteils 14. Die axiale Spannkraft 44 wird dabei über den Klemmbolzen 28 im Bereich des dem Zapfenende 48 zugewandten Bohrungsgrundes 50 der Querbohrung 26 auf den Paßzapfen 12 und damit auf das erste Werkzeugteil 10 übertragen. Andererseits müssen im Bereich der Halteschrauben die Spannkräfte über das jeweilige Innengewinde 30',30'' innerhalb der Wandung der Aufnahmehülse 16 aufgenommen und abgebaut werden. Durch eine aufeinander abgestimmte Wahl der Hülsenwandstärke, des Hülsenmaterials und der über die Schrauben 32' und 32'' eingeleiteten Spannkraft können die Reaktionskräfte zu einer gezielten elastischen Verformung der Anschlußhülse 16 ausgenutzt werden, die zu einer Streckung der Paßbohrung 20 in Richtung des Klemmbolzens und zu einer entsprechenden Querschnittsverringerung quer dazu führt (Fig. 2). Die sich im µ-Bereich abspielenden elastischen Verformungen sind zur Veranschaulichung in den Fig. 1 und 2 übertrieben dargestellt. Durch die Durchmesserverringerung quer zum Klemmbolzen 28 wird die Innenfläche der Paßbohrung unter Überbrückung des in der Regel einige µ betragenden Passungsspiels auf einander diametral gegenüberliegenden Seiten gegen die Oberfläche des Paßzapfens gedrückt. Dabei wird der Paßzapfen in Richtung der Kraftpfeile 52 von zwei Seiten her in die Paßbohrung eingespannt. Da andererseits der Klemmbolzen 28 in der Querbohrung 26 des Paßzapfens 12 frei verschiebbar und zwischen den starr in der Anschlußhülse 16 angeordneter Halteschrauben 32' ,32'' eingespannt ist, erhält man eine selbstzentrierende Vierpunktanlage im Bereich des Paßzapfens 12 und der Paßbohrung 20.

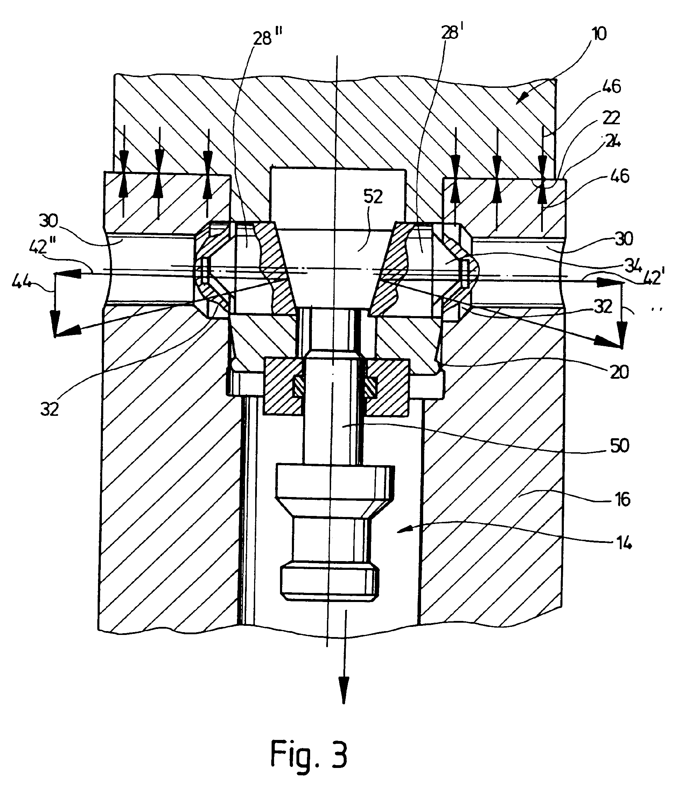

Das in Fig. 3 gezeigte, als Spindelanschluß ausgebildete Ausführungsbeispiel unterscheidet sich von dem Ausführungsbeispiel nach Fig. 1 und 2 dadurch, daß der Klemmbolzen 28 in zwei in der Querbohrung 26 einander diametral gegenüberliegende Teile 28' ,28'' unterteilt ist und daß der Spannvorgang über einen gegen innere Keilflächen der Klemmbolzen 28' ,28'' einwirkenden, über eine Zugstange 50 axial verschiebbaren Ziehkeil 52 auslösbar ist. Die einen Innenkonus 36 aufweisenden Halteschrauben 32 sind dort vom Inneren der Paßbohrung 20 her in die Innengewinde 30 der Aufnahmehülse 16 eingedreht und bilden eine Aufnahme für die Außenkonusse 34 der Klemmbolzen 28' ,28''. Der Spannvorgang führt zu einer den Fig. 1 und 2 entsprechenden Kraftübertragung auf die miteinander zu verbindenden Werkzeugteile 10, 14, so daß diesbezüglich auf die vorstehenden Erläuterungen Bezug genommen werden kann.

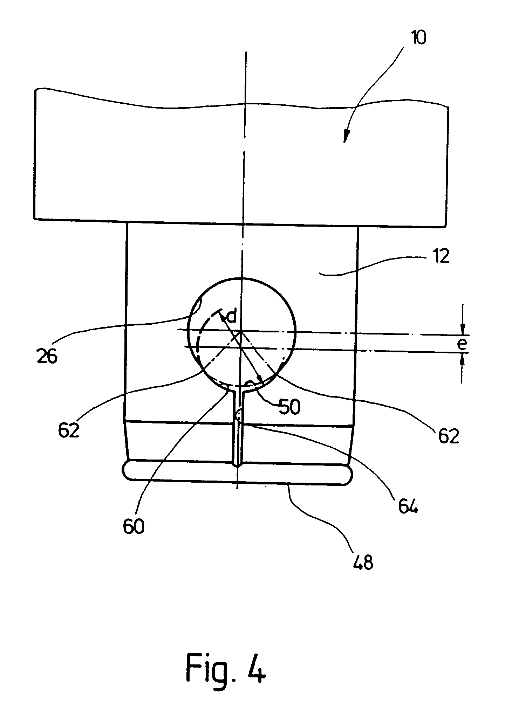

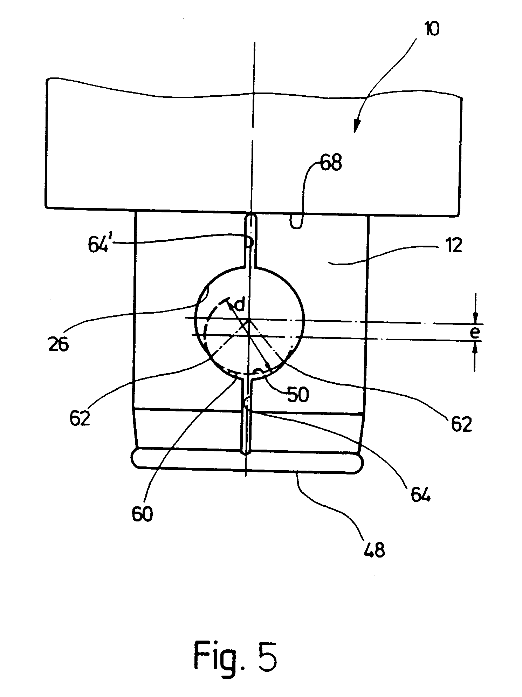

Bei den in Fig. 4 und 5 gezeigten Ausführungsbeispielen eines Werkzeugteils 10 sind im Paßzapfen 12 zusätzliche Vorkehrungen getroffen, die unabhängig von den vorstehend beschriebenen Maßnahmen oder in Verbindung mit diesen ebenfalls zu einer selbstzentrierenden Vierpunktanlage zwischen dem Paßzapfen 12 und der Paßbohrung 20 führen. Die Querbohrung 26 zur Aufnahme des Klemmbolzens 28 weist zu diesem Zweck an ihrem dem Zapfenende 48 zugewandten Bohrungsgrund eine Vertiefung 60 auf, die dazu führt, daß der in Fig. 4 und 5 nicht dargestellte Paßzapfen 28 unter der Einwirkung der Einzugkraft 44 nicht an tiefster Stelle gegen den endseitigen Bohrungsgrund 50, sondern an den seitlich nach außen verschobenen Rändern 62 der Vertiefung 60 angedrückt wird. Dadurch wird die Kraft 44 im Bereich der beiden Randlinien 62 in je eine axiale und radiale Kraftkomponente zerlegt, wobei die radiale Kraftkomponente zu einer quer zum Klemmbolzen 28 gerichteten radialen elastischen Ausbauchung des Paßzapfens 12 führt. Bei dem gezeigten Ausführungsbeispiel ist die Vertiefung 60 durch eine gegenüber der Querbohrung 26 um das Maß e exzentrisch zum Zapfenende 48 versetzte Bohrung kleineren Durchmessers d gebildet. Die Vertiefung 60 muß jedoch nicht rund sein und kann daher auch auf andere Art hergestellt werden. Wichtig ist nur, daß im Bereich des endseitigen Bohrungsgrundes 50 ein Freiraum entsteht, der vom Klemmbolzen 28 anlagefrei überbrückt wird.

Die Ausbauchung des Paßzapfens 12 kann durch einen vom Bohrungsgrund zum Zapfenende 48 und/oder zur Zapfenwurzel 68 führenden Einschnitt 64,64' verstärkt werden. Der Einschnitt 64 kann dabei entweder als Nut (Fig. 4) oder als durchgehender Schlitz ausgebildet sein. Zur Vermeidung von Schmutzansammlungen können die Einschitte 64,64' mit einem elastomeren Material ausgefüllt werden.

## Patentansprüche

1. Vorrichtung zur Verbindung zweier eine gemeinsame Achse insbesondere Drehachse, aufweisender Werkzeugteile (10, 14), mit einem am ersten Werkzeugteil (10) axial überstehenden Paßzapfen (12), mit einer den Paßzapfen (12) an dessen Wurzel umgebenden Ringfläche (22), mit einer am zweiten Werkzeugteil (14) axial überstehenden, eine Paßbohrung (20) zur Aufnahme des Paßzapfens (12) und eine gegen die Ringfläche (22) anpreßbare ringförmige Stirnfläche (24) aufweisenden Anschlußhülse (16), mit einem in einer Querbohrung (26) des Paßzapfens (12) verschiebbar und gegebenenfalls um seine Achse drehbar angeordneten, an seinen Enden einen Innen- bzw. Außenkonus (38,34) aufweisenden, ein- oder mehrteiligen Klemmbolzen (28;28' ;28''), und mit zwei in einander diametral gegenüberliegenden Innengewinden (30' ,30'') der Anschlußhülse (16) geführten, einen nach dem Hülseninneren weisenden, dem Innen- bzw. Außenkonus (38,34) des Klemmbolzens (28) entsprechenden Außen- bzw. Innenkonus (40,36) aufweisenden, beim Spannvorgang keilartig mit dem Klemmbolzen (28) verspannbaren Halteschrauben (32' ,32'') (32' ,32''), wobei der Klemmbolzen (28) und die Halteschrauben (32' ,32'') einen beim Spannvorgang den Einzug des Paßzapfens (12) in die Paßbohrung (20) und das gegenseitige Anpressen der Ringfläche (22) und der Stirnfläche (24) bewirkenden Achsversatz aufweisen, **dadurch gekennzeichnet,** daß die Wandstärke und das Material der Anschlußhülse (16), das Passungsspiel zwischen Paßzapfen (12) und Paßbohrung (20) und die über die Halteschrauben (32' ,32'') in das Hülsenmaterial einleitbare Spannkraft so aufeinander abgestimmt sind, daß die Anschlußhülse im Spannzustand in Achsrichtung des Klemmbolzens (28) elastisch aufgeweitet und in Querrichtung hierzu unter elastischer Durchmesserverringerung in einander diametral gegenüberliegenden Bereichen (52) mit der Innenfläche der Paßbohrung (20) gegen die Oberfläche des Paßzapfens (12) angepreßt ist.

2. Vorrichtung zur Verbindung zweier eine gemeinsame Achse, insbesondere Drehachse, aufweisender Werkzeugteile (10,14) , mit einem am ersten Werkzeugteil (10) axial überstehenden Paßzapfen (12), mit einer den Paßzapfen (12) an dessen Wurzel umgebenden Ringfläche (22), mit einer am zweiten Werkzeugteil axial überstehenden, eine Paßbohrung (20) zur Aufnahme des Paßzapfens (12) und eine gegen die Ringfläche (22) anpreßbare ringförmige Stirnfläche (24) aufweisenden Anschlußhülse (16), mit einem in einer Querbohrung (26) des Paßzapfens (12) verschiebbar und gegebenenfalls um seine Achse drehbar angeordneten, an seinen Enden einen Innen- bzw. Außenkonus (38,34) oder eine Keilschräge aufweisenden, ein- oder mehrteiligen Klemmbolzen (28;28';28''), und mit zwei in einander diametral gegenüberliegenden Innengewinden (30,30') der Anschlußhülse (16) geführten, einen nach dem Hülseninneren weisenden, dem Innen- bzw. Außenkonus (38,34) oder der Keilschräge des Klemmbolzens (28) entsprechenden Außen- bzw. Innenkonus (40,36) oder eine Keilschräge aufweisenden, beim Spannvorgang keilartig mit dem Klemmbolzen (28) verspannbaren Halteschrauben (32' ,32''), wobei der Klemmbolzen (28) und die Halteschrauben (32' ,32'') einen beim Spannvorgang den Einzug des Paßzapfens (12) in die Paßbohrung (20) und das gegenseitige Anpressen der Ringfläche (22) und der Stirnfläche (24) bewirkenden Achsversatz (a) aufweisen, **dadurch gekennzeichnet,** daß die im Paßzapfen (12) befindliche Querbohrung (26) im Bereich ihres dem Zapfenende zugewandten Grundes eine sich über die Querbohrungslänge erstreckende, an ihren Längsrändern (62) eine Anlage für den eingespannten Klemmbolzen (28) bildende Vertiefung (60) aufweist und daß der Paßzapfen (12) mindestens einen sich über die Querbohrungslänge erstreckenden, zum Inneren der Querbohrung (26) offenen Einschnitt (64,64') aufweist.

3. Vorrichtung nach Anspruch 2, **dadurch gekennzeichnet,** daß die Vertiefung (60) durch eine gegenüber der Querbohrung (26) in Richtung Zapfenende (48) exzentrische Bohrung mit gegenüber der Querbohrung (26) kleinerem Durchmesser gebildet ist.

4. Vorrichtung nach Anspruch 2, **dadurch gekennzeichnet,** daß die Vertiefung durch eine zum Zapfenende (48) gestreckte ovale Verformung der Querbohrung gebildet ist.

5. Vorrichtung nach einem der Ansprüche 2 bis 4, **dadurch** **gekennzeichnet,** daß die Längsränder (62) der Vertiefung (60) um die Querbohrungsachse einen Winkel von ± 40° bis ± 50° gegenüber dem endseitigen Bohrungsgrund einschließen.

6. Vorrichtung nach einem der Ansprüche 2 bis 5, **dadurch** **gekennzeichnet,** daß der Einschnitt (64) im Bereich des dem freien Zapfenende (48) zugewandten Grundes (50) der Querbohrung (26) angeordnet ist.

7. Vorrichtung nach einem der Ansprüche 2 bis 6, **dadurch** **gekennzeichnet,** daß der Einschnitt (64') im Bereich des der Zapfenwurzel (68) zugewandten Grundes der Querbohrung (26) angeordnet ist.

8. Vorrichtung nach Anspruch 6, **dadurch gekennzeichnet,** daß die Tiefe des Einschnitts (64) ein Mehrfaches der Wandstärke zwischen Einschnittgrund und Zapfenende (48) beträgt.

9. Vorrichtung nach Anspruch 6, **dadurch gekennzeichnet,** daß der Einschnitt (64) als zum Zapfenende (48) durchgehender Schlitz ausgebildet ist.

10. Vorrichtung nach einem der Ansprüche 2 bis 9, **dadurch** **gekennzeichnet,** daß der Einschnitt (64,64') mit einem elastomeren Material ausgefüllt ist.

## Claims

1. Device for connecting two tool sections (10, 14) having a common axis, particularly an axis of rotation, with a fitting pin (12) projecting axially from the first tool section (10), with an annular surface (22) surrounding the fitting pin (12) at its root, with a connecting sleeve (16) projecting axially from the second tool section (14), having a mating bore (20) for receiving the fitting pin (12) and an annular end face (24) which is pressable against the annular surface (22), with a one-part or multi-part tightening bolt (28; 28'; 28'') movable in a cross bore (26) of the fitting pin (12) and, if necessary, arranged rotatably about its axis, having an internal or external cone (38, 34) at its ends, and with two retaining screws (32', 32'') (32', 32'') guided in diametrically opposed internal threads (30', 30'') of the connecting sleeve (16), having an external or internal cone (40, 36) facing the inside of the sleeve and corresponding to the internal or external cone (38, 34) of the tightening bolt (28), which are braceable in a wedge-like manner with the tightening bolt (28) during the tightening operation, the tightening bolt (28) and the retaining screws (32', 32'') having an axial offset causing, during the tightening operation, a drawing of the fitting pin (12) into the mating bore (20) and a mutual pressing together of the annular surface (22) and the end face (24), **characterised in that** the wall thickness and the material of the connecting sleeve (16), the clearance between the fitting pin (12) and mating bore (20) and the clamping force which is introducible in the sleeve material via the retaining screws (32', 32'') are determined with respect to each other so that the connecting sleeve in the clamped state is elastically widened in the axial direction of the tightening bolt (28) and, transversely thereto, is pressed, with elastic reduction in diameter in diametrically opposed regions (52), with the inner surface of the mating bore (20), against the surface of fitting pin (12).

2. Device for connecting two tool sections (10, 14) having a common axis, particularly an axis of rotation, with a fitting pin (12) projecting axially from the first tool section (10), with an annular surface (22) surrounding the fitting pin (12) at its root, with a connecting sleeve (16) projecting axially from the second tool section, having a mating bore (20) for receiving the fitting pin (12) and an annular end face (24) which is pressable against the annular surface (22), with a one-part or multi-part tightening bolt (28; 28'; 28'') movable in a cross bore (26) of the fitting pin (12) and, if necessary, arranged rotatably about its axis, having an internal or external cone (38, 34) or a key taper at its ends, and with two retaining screws (32', 32'') guided in diametrically opposed internal threads (30, 30') of the connecting sleeve (16), having an external or internal cone (40, 36) or a key taper facing the inside of the sleeve and corresponding to the internal or external cone (38, 34) or the key taper of the tightening bolt (28), which are braceable in a wedge-like manner with the tightening bolt (28) during the tightening operation, the tightening bolt (28) and the retaining screws (32', 32'') having an axial offset (a) causing, during the tightening operation, a drawing of the fitting pin (12) into the mating bore (20) and a mutual pressing together of the annular surface (22) and the end face (24), **characterised in that** the cross bore (26) in the fitting pin (12) has, in the region of its base facing the end of the pin, a recess (60) extending over the length of the cross bore and forming, at its longitudinal edges (62), a contact surface for the clamped tightening bolt (28) and that the fitting pin (12) has at least one notch (64, 64') extending over the length of the cross bore and open to the inside of the cross bore (26).

3. Device according to claim 2, **characterised in that** the recess (60) is formed by a bore which is eccentrically offset with respect to the cross bore (26) in the direction of the end (48) of the pin, said bore being of smaller diameter than the cross bore (26).

4. Device according to claim 2, **characterised in that** the recess is formed by an oval deformation of the cross bore, said oval deformation being elongated towards the end (48) of the pin.

5. Device according to one of claims 2 to 4, **characterised in** **that** the longitudinal edges (62) of the recess (60) define an angle of ± 40° to ± 50° about the cross bore axis with respect to the base on the end side of the bore.

6. Device according to one of claims 2 to 5, **characterised in** **that** the notch (64) is arranged in the region of the base (50) of the cross bore (26) which faces the free end (48) of the pin.

7. Device according to one of claims 2 to 6, **characterised in** **that** the notch (64') is arranged in the region of the base of the cross bore (26) which faces the root (68) of the pin.

8. Device according to claim 6, **characterised in that** the depth of the notch (64) is a multiple of the wall thickness between the base of the notch and the end (48) of the pin.

9. Device according to claim 6, **characterised in that** the notch (64) is designed as a slot extending as far as the end (48) of the pin.

10. Device according to one of claims 2 to 9, **characterised in** **that** the notch (64, 64') is filled with an elastomeric material.

## Revendications

1. Dispositif d'assemblage de deux parties d'outil (10, 14) présentant un axe commun, un axe de rotation notamment, avec un goujon (12) en saillie axiale sur la première partie d'outil (10), avec une surface annulaire (22) enveloppant le goujon (12) à sa base, avec une douille de jonction (16) en saillie axiale sur la seconde partie d'outil (14), dotée d'un trou d'ajustage (20) pour recevoir le goujon (12) et d'une surface frontale annulaire (24), qui peut être pressée sur la surface annulaire (22), avec un boulon de serrage (28; 28'; 28'') en une ou plusieurs parties, mobile dans un trou transversal (26) du goujon (12), éventuellement disposé avec une possibilité de rotation autour de son axe, et présentant sur ses extrémités un cône interne et/ou externe (38, 34), et avec deux vis de retenue (32', 32''), guidées dans deux taraudages (30', 30'') diamétralement opposés de la douille de jonction (16), munies d'un cône externe et/ou interne (40, 36) dirigé vers l'intérieur de la douille, correspondant au cône interne et/ou externe (38, 34) du boulon de serrage (28), et pouvant être serrées à la manière d'une clavette, lors du processus de serrage, avec le boulon de serrage (28), le boulon (28) et les vis de retenue (32', 32'') présentant un déport axial qui provoque, lors du processus de serrage, la rentrée du goujon (12) dans le trou d'ajustage (20) et la compression mutuelle de la surface annulaire (22) et de la surface frontale (24), caractérisé en ce que l'épaisseur de paroi et le matériau de la douille de jonction (16), le jeu d'ajustement entre le goujon (12) et le trou d'ajustage (20), et la force de serrage, qui peut être engagée dans le matériau de la douille par l'intermédiaire des vis de retenue (32', 32''), sont mutuellement adaptés de sorte que la douille de jonction, à l'état de serrage, est élargie élastiquement dans le sens axial du boulon de serrage (28), et est pressée à la transversale de ce sens, avec une réduction diamétrale élastique dans des zones (52) diamétralement opposées, contre la surface du goujon (12), avec la surface interne du trou d'ajustage (20).

2. Dispositif d'assemblage de deux parties d'outil (10, 14) présentant un axe commun, un axe de rotation notamment, avec un goujon (12) en saillie axiale sur la première partie d'outil (10), avec une surface annulaire (22) enveloppant le goujon (12) à sa base, avec une douille de jonction (16) en saillie axiale sur la seconde partie d'outil, dotée d'un trou d'ajustage (20) pour recevoir le goujon (12) et d'une surface frontale annulaire (24), qui peut être pressée sur la surface annulaire (22), avec un boulon de serrage (28; 28'; 28'') en une ou plusieurs parties, mobile dans un trou transversal (26) du goujon (12), éventuellement disposé avec une possibilité de rotation autour de son axe, et présentant sur ses extrémités un cône interne et/ou externe (38, 34) ou un chanfrein conique, et avec deux vis de retenue (32', 32''), guidées dans deux taraudages (30, 30') diamétralement opposés de la douille de jonction (16), munies d'un cône externe et/ou interne (40, 36) dirigé vers l'intérieur de la douille, ou d'un chanfrein conique, correspondant au cône interne et/ou externe (38, 34) ou au chanfrein conique du boulon de serrage (28), et pouvant être serrées à la manière d'une clavette, lors du processus de serrage, avec le boulon de serrage (28), le boulon (28) et les vis de retenue (32', 32'') présentant un déport axial (a) qui provoque, lors du processus de serrage, la rentrée du goujon (12) dans le trou d'ajustage (20) et la compression mutuelle de la surface annulaire (22) et de la surface frontale (24), caractérisé en ce que le trou transversal (26), situé dans le goujon (12), présente, dans la zone de son fond tourné vers l'extrémité du goujon, un évidement (60), qui s'étend sur la longueur du trou transversal et forme, sur ses bords longitudinaux (62), un appui pour le boulon de serrage (28) encastré, et en ce que le goujon (12) présente une entaille (64, 64') au moins, s'étendant sur la longueur du trou transversal et ouverte en direction de l'intérieur de ce trou (26).

3. Dispositif suivant la revendication 2, caractérisé en ce que l'évidement (60) est formé par un trou, excentré par rapport au trou transversal (26) en direction de l'extrémité (48) du goujon, et d'un diamètre inférieur par rapport au trou transversal (26).

4. Dispositif suivant la revendication 2, caractérisé en ce que l'évidement est formé par une déformation ovale du trou transversal, allongée en direction de l'extrémité (48) du goujon.

5. Dispositif suivant l'une quelconque des revendications 2 à 4, caractérisé en ce que les bords Longitudinaux (62) de l'évidement (60), autour de l'axe du trou longitudinal, forment un angle de ± 40 à ± 50° par rapport au fond du trou côté extrême.

6. Dispositif suivant l'une quelconque des revendications 2 à 5, caractérisé en ce que l'entaille (64) est disposée dans la zone du fond (50) du trou transversal (26), tourné vers l'extrémité libre (48) du goujon.

7. Dispositif suivant l'une quelconque des revendications 2 à 6, caractérisé en ce que l'entaille (64') est disposée dans la zone du fond du trou transversal (26), tourné vers la base (68) du goujon.

8. Dispositif suivant la revendication 6, caractérisé en ce que la profondeur de l'entaille (64) équivaut à un multiple de l'épaisseur de paroi entre le fond de l'entaille et l'extrémité (48) du goujon.

9. Dispositif suivant la revendication 6, caractérisé en ce que l'entaille (64) est réalisée sous forme de fente continue en direction de l'extrémité (48) du goujon.

10. Dispositif suivant l'une quelconque des revendications 2 à 9, caractérisé en ce que l'entaille (64, 64') est garnie d'un matériau élastomère.
